**Europäisches Patentamt**

**European Patent Office**

**Office européen des brevets**

(11) Publication number: **0 034 128**
**B1**

(12) **EUROPEAN PATENT SPECIFICATION**

(45) Date of publication of patent specification: **10.07.85**  (51) Int. Cl.⁴: **F 16 B 21/02**

(21) Application number: **81830014.7**

(22) Date of filing: **27.01.81**

(54) Pin and relevant seat to connect together two elements.

(30) Priority: **06.02.80 IT 1971980**

(43) Date of publication of application:
**19.08.81 Bulletin 81/33**

(45) Publication of the grant of the patent:
**10.07.85 Bulletin 85/28**

(84) Designated Contracting States:
**AT BE CH DE FR GB LI LU NL SE**

(56) References cited:
**FR-A-1 308 655**
**FR-A-2 027 619**
**US-A-3 272 061**
**US-A-3 335 471**

(73) Proprietor: **SETI S.p.A.**
**Località S. Maria La Bruna**
**I-80040 Torre del Greco (Napoli) (IT)**

(72) Inventor: **Ranzanigo, Pierluigi**
**Via Cave 68**
**Brescia (IT)**

(74) Representative: **D'Orio, Aldo**
**Via Francesco Sforza 5**
**I-20122 Milan (IT)**

Courier Press, Leamington Spa, England.

## Description

The present invention refers to a pin and the relevant seat to connect together two facing elements, such as for example a box and its cover, a frame supporting electrical equipment at the opening of an enclosing box, and this by accomplishing the locking with a rotation of 90°.

Attempts to obtain pins accomplishing the locking by a rotation of 90° have already been made, using screws whose threading was interrupted by two plane millings parallel to each other and to the screw axis, so that the screw interrupted coils would have gripped, with a self-threading action, the internal part of a suitable section. These screws, however, have not given satisfactory results mainly because their gripping action was limited and their axial holding was completely unreliable.

On the other hand the possibility of very rapidly connecting together two elements by the rotation of 90° of a suitable pin is very important in order to eliminate screws and relevant threaded bushes, which imply a high production cost and a considerable waste of time in screwing and unscrewing such elements.

The US—A—3272061, according to the precharacterising part of claim 1, describes a pin and relevant seat, apt to connect together two elements, by rotating by an angle of 90° the pin in the seat, using a screwdriver. Rotations greater than 90° are prevented by ribs provided in the seat.

According to this US Patent, the seat is formed into an accessory element to be interposed between the elements to be connected together.

The present invention proposes a new type of pin and relevant seat able to insure a perfect connection by a 90° rotation in one direction and the perfect release by a 90° rotation in the opposite direction, the seat being formed directly in one of the element to be connected.

The pin and relevant seat of the invention are characterised by the features in the characterising part of claim 1.

An example of this invention, however, not limitative of the possible realizations, is shown in the enclosed tables in which:

Figures 1 and 2 show, in an enlarged scale, the complete pin with the tabs seen from the front and in profile respectively;

Figure 3 is a section ideally obtained by cutting the pin along line A—A of Figure 2;

Figure 4 shows a horizontal section of the seat in which the pin of the previous figures can be driven;

Figure 5 shows a section ideally obtained by cutting the seat along line B—B of Figure 4.

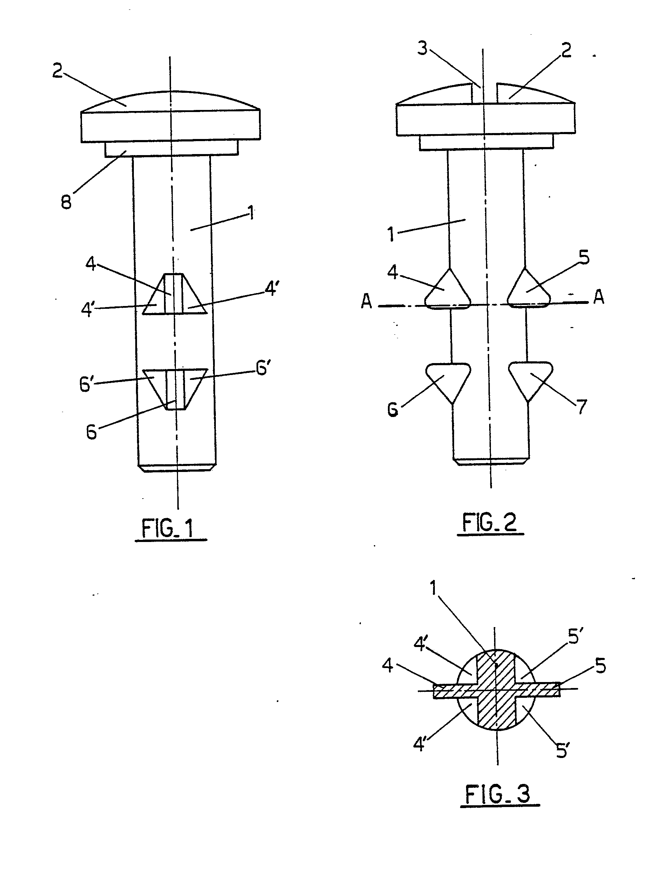

As shown in Figure 1, 2 and 3, the pin of this invention is made of a cylindrical stem 1, provided with a head 2 and a slot 3, similar to the milled head of a screw, the slot being suitable to allow the operation with a strongly-built screwdriver.

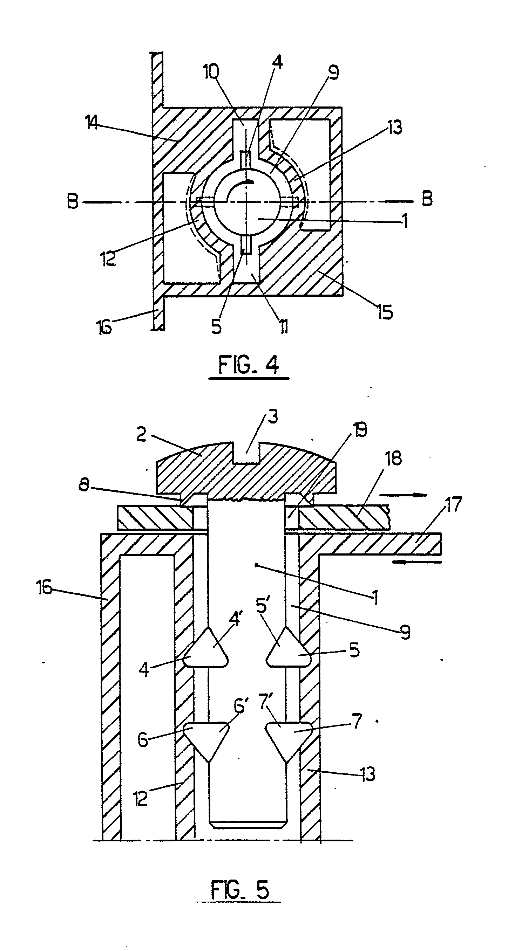

Two couples of tabs are fixed on stem 1, preferably on the half part closer to the head; the first couple (upper tabs 4 and 5) diametrically opposed and the second couple (lower tabs 6 and 7) also diametrically opposed. All tabs are arranged so as to lie on the same plane passing through the stem axis. Each tab is delimited by an inclined side, which determines its lateral extent, and by a side perpendicular to the stem axis. The upper tabs 4 and 5 present their inclined sides diverging downwardly, while the lower tabs 6 and 7 present their inclined sides diverging upwardly, as clearly indicated in Figures 2 and 5.

Tabs 4, 5, 6 and 7 are usually obtained by upsetting the stem material, so that, on the sides of each tab, cavities 4', 5', 6' and 7' respectively are created (see Fig. 5), resulting from the removal of the material necessary to form the relative tabs. Theoretically, the inclined side and the side perpendicular to the axis, which delimit each tab, should converge in a sharp vertex, but in practice the upsetting of the material forms a round blunting that is preferable to a sharp vertex because it facilitates the correct tab penetration in the seat material as will be explained later.

The pin presents, emerging from the lower part of head 2, a crown 8 (see also Fig. 5) having a sharp edge pointing downward, the purpose of which will also be explained later.

Figures 4 and 5, besides showing the pin of the invention in a transversal section and in a longitudinal section respectively, present also the seat in which such pin will be housed. This seat is made of a cylindrical cavity 9, having a diameter slightly larger than that of the stem 1, and provided, on two sides diametrically opposed, of longitudinal grooves 10 and 11; these grooves are extended up to the opening of the cavity 9 so as to allow the introduction of the pin and tabs 4 to 7. Of course the grooves 10 and 11 are also wider and deeper than the respective tabs.

As shown in Figure 4, the cavity 9 is further delimited by two opposite thin walls 12 and 13 shaped in such a way as to form a little more than a quarter of an arc of the total cylindrical wall plus the wall of the corresponding groove 10 or 11. Their ends are delimited, on one side by the solid parts 14 and 15 respectively, thus internally completing the cylindrical wall of the cavity 9, and on the other side by the respective groove 10 or 11. In this way, the thin walls 12 and 13 constitute two elastically yielding parts.

The seat thus created is generally obtained on a wall 16 which forms the lateral side of a groove of insulating material, for example plastics, and arranged so as to protrude from this side toward the inside of the box itself. Upward the seat has its opening on a plane 17 or at the level of plane 17, on which the plane 18 of another element is positioned; the plane 18 can be the edge of the cover used to seal the box, or the top of a basket-type support entering inside the box to fix electrical parts or the frame supporting interchangeable electrical equipments, etc. Plane 18 presents a hole 19 having a diameter about the same as that of the cavity 9, which is aligned coaxially with the cavity thus allowing the introduction of stem 1.

To lock the pin once the planes 18 and 19 are overlapping and aligned, the operations are the following: the pin, angularly oriented so that the tabs 4 and 5 slide inside the grooves 10 and 11, is inserted in cavity 9 until the crown 8 rests on the plane 18, as shown in Figures 4 and 5. At this point a screwdriver is inserted in the slot 3, the head 2 of the pin is pressed down and at the same time a rotation to the right of about 90° is exerted.

During this operation, the tabs 4 to 7 will press on the walls 12 and 13, which will elastically yield, digging a track on the wall itself and gripping on the material, until reaching the final position indicated in Figure 4 with dashed lines and in Figure 5 with solid lines. Evidently, in such position the pin is locked both by the track which it has digged and by the pressure exerted by the elastic walls 12 and 13.

It is also evident that, should the operator inadvertently try to exceed the rotation of 90°, the solid parts 14 and 15 will oppose a resistance to prevent this further operation.

In this locked position, the sharp-edged crown 8 will penetrate in the material of the plane 18, acting on the latter not only with the pressure that keeps it against the plane 17, but also with a horizontal constraint. In this way, any sliding parallel to the plane 17, in the direction indicated by the arrows, is prevented, thus eliminating possible relative movements, for example between the box and its cover; this could not be avoided beforehand by the use of simple screws.

As stated earlier, the tabs 4 and 5 present the inclined sides diverging downwardly, while the tabs 6 and 7 present their inclined sides diverging upwardly. This arrangement makes easier the introduction and the removal of the pin, because the inclined sides of the tabs 6 and 7 represent an inducement to the introduction, while the inclined sides of the tabs 4 and 5 represent an inducement to the removal, thus preventing interferences with the edges of the holes crossed by the pin.

Of course, the invention is not limited to the above illustrated realization.

## Claims

1. Pin and appropriate seat apt to connect together two elements by rotating by an angle of about 90° the pin in the seat, wherein the pin has an enlarged head (2) provided with a slot (3) for cooperation with a screwdriver, and a stem (1) provided with gripping tabs (4, 5, 6, 7) protruding from the stem in diametrically opposed directions, and wherein the seat has a cylindrical cavity (9) designed to be elastically deformable by the tabs and to limit the rotation of the pin in the seat, characterised in that the pin is provided with two couples of gripping tabs (4, 5) and (6, 7) arranged at different levels along the stem itself, each tab being delimited by one side inclined with respect to the stem axis and by another side perpendicular to this axis, the couple of tabs (4, 5) closer to the head (2) of the pin presenting the inclined sides diverging downwardly away from the head, while the couple of tabs (6, 7) closer to the end of the pin opposite to said head (2) presenting the inclined sides diverging upwardly towards the head, and in that the cylindrical cavity (9) of the seat is provided with two diametrically opposed longitudinal grooves (10, 11) and further delimited by two opposite walls (12, 13) extending between the grooves along an arc of about 90° and designed to be elastically deformable by said gripping tabs to make the locking of the tabs in the seat material easier due to elastic yielding of these walls, said walls ending in solid parts (14, 15) having a greater thickness with respect to the walls (12, 13), to prevent further advancement of the tabs.

2. Pin and seat as in claim 1, characterised in that the seat is formed directly in one of the two elements to be connected together.

3. Pin and seat as in claims 1 and 2, characterised in that the pin presents a sharp-edged crown (8) directed parallel to its axis, and protruding from the lower part of its head (2), said sharp-edged crown being apt to rest and to grip on a flat face of the upper one of the two elements to be connected which is not provided with said seat.

## Patentansprüche

1. Zapfen und geeigneter Sitz zur Verbindung zweier Elemente durch Drehung des Zapfens in dem Sitz um etwa 90°; wobei der Zapfen aus einem vergrösserten Kopf (2) besteht, dieser zum Greifen mit einem Schraubenzieher versehen mit einer Nut (3); sowie aus einem Schaft (1), der mit Flügeln (4, 5, 6, 7) versehen ist, die in diametral entgegengesetzten Richtungen vom Schaft vorspringen; wobei der Sitz einen zylindrischen Hohlraum (9) hat, der für elastische Verformung durch die Flügel ausgelegt ist und für Begrenzung der Drehung des Zapfens im Sitz; Mit dem Merkmal, dass der Zapfen mit zwei Paaren greifender Flügel (4, 5) und (6, 7) ausgestattet ist, die längs des Schaftes auf unterschiedlicher Höhe angeordnet sind; dass jeder Flügel begrenzt ist durch eine schräg zur Schaftachse geneigte Seite und eine lotrecht zur Schaftachse befindliche Seite, wobei das dem Zapfenkopf (2) näher angeordnete Flügelpaar (4, 5) auseinanderstrebende, abwärts gerichtete und vom Kopf sich entfernende geneigte Seiten aufweist, während das Flügelpaar (6, 7), näher am Zapfenende angeordnet und dem Kopf (2) entgegengesetzt, auseinanderstrebende, aufwärts gegen den Kopf gerichtete geneigte Seiten zeigt; dass der zylindrische Hohlraum (9) des Sitzes mit zwei diametral entgegengesetzten Längsnuten (10, 11) versehen, ausserdem begrenzt ist von zwei einander entgegengesetzten Wänden (12, 13), die zwischen den Nuten einen Bogen von etwa 90° bilden und für elastische Verformung durch die greifenden Flügel ausgelegt sind, sodass die Einspannung der Flügel in das Material des Sitzes erleichtert wird, da die Wände elastisch nachgeben; diese Wände enden in feste Teile (14, 15) grösserer Stärke im Vergleich zu den Wänden (12, 13) zur Verhinderung weiteren Vorrückens der Flügel.

2. Zapfen und Sitz gemäss Anspruch 1, mit dem Merkmal, dass der Sitz direkt in einem der beiden zu verbinden den Elemente gebildet ist.

3. Zapfen und Sitz gemäss Ansprüchen 1 und 2, mit dem Merkmal, dass der Zapfen eine scharfkantige Krone (8) aufweist, die parallel zu dessen Achse liegt und vom unteren Teil des Kopfes (2) herausragt, welch scharfkantige Krone geeignet ist, an einer flachen Fläche des oberen der beiden zu verbindenden Elemente, das nicht mit besagtem Sitz versehen ist, aufzusetzen und zu greifen.

**Revendications**

1. Goupille et siège correspondant pour unir deux éléments lorsque la goupille effectue une rotation de 90° dans son siège, où la goupille possède une tête (2) élargie dotée d'une fente (3) pour tournevis, et une tige (1) dotée d'ailettes de serrage (4, 5, 6, 7) qui saillent de la tige dans des directions diamétralement opposées; où le siège possède une cavité cylindrique (9), laquelle peut être déformée, par élasticité, par les ailettes et limiter la rotation de la goupille dans le siège; ce dispositif est caractérisé i) par le fait que les ailettes de serrage de la goupille forment deux paires (4, 5) et (6, 7) placées à des niveaux différents le long de la goupille, chaque ailette étant délimitée, d'une part, par un côté incliné par rapport à l'axe de la goupille et, d'autre part, par un autre côté perpendiculaire à cet axe, la paire d'ailettes (4, 5) étant plus rapprochée de la tête (2) de la goupille avec les côtés inclinés orientés vers le bas en direction opposée de la tête, tandis que la paire d'ailettes (6, 7) est plus rapprochée de l'autre extrémité de la goupille la plus éloignée de la tête (2) et présente les côtés inclinés orientés vers le haut en direction de la tête, et ii) par le fait que la cavité cylindrique (9) du siège est dotée de deux cannelures longitudinales diamétralement opposées (10, 11) ultérieurement délimitées par deux parois opposées (12, 13) qui s'étendent entre les cannelures pour former un arc de cercle de 90° environ, ces parois pouvant être déformées, par élasticité, par les susdites ailettes de serrage afin de faciliter le serrage grâce à la nature élastique de ces parois, lesquelles possèdent des extrémités solides (14, 15) plus épaisses que celles des parois proprement dites (12, 13) afin d'empêcher un avancement ultérieur des ailettes.

2. Goupille et siège correspondant, selon la revendication 1, sont caractérisés par le fait que le siège est directement formé de l'un des deux éléments devant être unis.

3. Goupille et siège correspondant, selon les revendications 1 et 2, sont caractérisés par le fait que la goupille présente une couronne (8) à bord pointu orientée parallèlement à son axe et en saillie de la partie inférieure de sa tête (2); cette couronne à bord pointu peut reposer et être serrée sur une face plane de la face supérieure de l'un des deux éléments devant être unis, lequel est dépourvu du susdit siège.

FIG. 1

FIG. 2

FIG. 3

FIG. 4

FIG. 5

2